# EUROPEAN PATENT APPLICATION

(11) **EP 0 784 386 A2**
(43) Date of publication of application: **16.07.1997**
(21) Application number: 97300085.4
(22) Date of filing: 08.01.1997
(51) Int. Cl.: H04B 7/00

(54) **Wireless audio signal transmission system**

(30) Priority: 11.01.1996 US 584348
(71) Applicant: MARIKON RESOURCES, INC, Arcadia, CA 91006 (US)
(72) Inventor: Chu, Winston Tak Yin, Kowloon, Hong Kong (HK)
(74) Representative: Findlay, Alice Rosemary

(57) **Abstract**

A wireless speaker drive system provides a wireless connection between an audio output and a speaker and comprises a frequency modulator (118) to convert the audio signal into a frequency modulated signal, channel selection means (124) to allow user-selection of the carrier frequency of frequency modulation, signal transmission means to wirelessly transmit the frequency-modulated signal, signal receiving means remote from said signal transmission means, signal reconstruction means including an FM detector (214) to reconstruct an audio signal from the FM signal, and scanning means (218) to adjust the frequency at which signal reconstruction occurs.

## Description

The invention relates to a wireless local signal transmission system and in particular to such a system for transmitting audio signals.

It is becoming increasingly common in the home to use wireless local signal transmission systems for electrical devices such as hi-fi and television systems. In such a system a central transmitter can be employed to serve a remote sensing unit, which owing to the wireless connection can be located as desired throughout a room, or even in a different room in the house, without requiring the use of cable connections.

Both audio and television systems can employ stereo audio signals in their transmission, and it is desirable that a wireless transmission system provides for transmission of such stereo signals. It is known to employ a technique whereby stereo audio channels are provided by forming a first signal which is a summation of right and left audio channels, and forming a second signal which is a difference signal and which is modulated on a subcarrier signal (typically of 38 KHz). The subcarrier is suppressed and the combination of the first signal, subcarrier-suppressed modulated second signal and a pilot signal having a frequency of half of the subcarrier (19 KHz) forming a multiplexed stereo signal. This combined signal is used to modulate a carrier for transmission.

US Patent No. 5349386 discloses such a system for use in particular with television signals in which a subcarrier having a frequency equal to three times the horizontal scanning frequency of the television is used to avoid the interferences with scanning signal or harmonics thereof.

A drawback with such a conventional system is that interferences may arise from other domestic appliances in the home giving rise to signals at similar radio frequencies.

A further drawback with the system of US 5349386 concerns the receiver unit. This system employs a simple headphone driver which amplifiers the left and right channel audio signals from the FM receiver to respective electroacoustics transducer elements of a stereo headphone unit. This arrangement is however unsuitable for providing signals to higher power speakers.

The present invention seeks to provide a system which overcomes the drawbacks identified above.

According to a first aspect of the present invention there is provided a wireless speaker drive system for providing a wireless connection between an audio output and a speaker, comprising:
(a) a frequency modulator to convert the audio signal into a frequency modulated signal;
(b) channel selection means to allow user-selection of the carrier frequency of frequency modulation;
(c) signal transmission means to wirelessly transmit the frequency-modulated signal;
(d) signal receiving means remote from said signal transmission means;
(e) signal reconstruction means including an FM detector to reconstruct an audio signal from the FM signal, and
(f) scanning means to adjust the frequency at which or range of frequencies over which signal reconstruction occurs.

The provision of channel selection means allows the user to alter the frequency of transmission, so that if a frequency is utilised which is found to suffer interference from other appliances, the user may switch to another frequency. The scanning means allows the receiver to lock onto the transmitted signal whatever channel is selected for transmission.

In the preferred embodiment the scanning means is arranged to continuously adjust the frequency at which or range of frequencies over which signal reconstruction occurs until a frequency of high amplitude is received. The frequency modulator includes a carrier signal generating means to generate a carrier signal of frequency determined by an applied voltage. The channel selection means comprises a resistor network and switch operable by the user and having at least two switch positions in order to control the applied voltage applied to the carrier signal generating means. The carrier signal generating means include a variable capacitor arranged to output a signal of frequency dependent on applied voltage. The scanning means comprises a binary counter arranged to effect a frequency scan in the form of a stepwise frequency increase of the frequency or range of frequencies over which signal reconstruction is effected, and to stop such frequency scan, locking the range of accepted frequencies when a high amplitude signal is received. A mixer is provided which mixes the received signals with an output signal from a local oscillator, said scanning means being arranged to effect a stepwise frequency scan of the frequency of the local oscillator output.

In a further aspect the invention provides a wireless speaker drive system for providing a wireless connection between an audio output and the speaker, comprising:
(a) a stereo encoder employing a pilot signal and subcarrier signal to produce a single multiplexed signal from right and left channel signals;
(b) a frequency modulator to convert the multiplexed audio signal into a frequency modulated signal;
(c) signal transmission means to effect wireless transmission of the frequency-modulated signal;
(d) signal receiving means remote from said signal transmission means;
(e) signal reconstruction means including a frequency modulation detector to reconstruct a multiplexed audio signal from the received frequency modulated signal, and a stereo decoder to reconstruct right and left channel audio signals from said multiplexed signal; and
(f) filter means for removing unwanted signals at the frequency of both the pilot signal and subcarrier signal employed in the stereo encoder.

The provision of the filtering means provides a particularly clean output free of unwanted signal components associated with the stereo encoder.

Embodiments of the invention are now described, by way of example only, with reference to the following drawings in which:-
Figure 1 is a schematic diagram showing in outline the elements of the wireless signal transmission of the invention;
Figure 2 is a block diagram of a transmitter unit in accordance with an embodiment of the invention;
Figure 3 shows a circuit employed in channel selection means of the transmitter unit;
Figure 4 is a block diagram of a receiver unit in accordance with an embodiment of the invention;
Figure 5 is a block diagram of a filtering and amplification unit;
Figure 6 illustrates a filter arrangement;
Figure 7 is a block diagram of an infrared transmitter unit;
Figure 8 is a block diagram of an infra-red receiver unit; and
Figure 9 is a block diagram of the filtering and amplifying unit for the infra-red system.

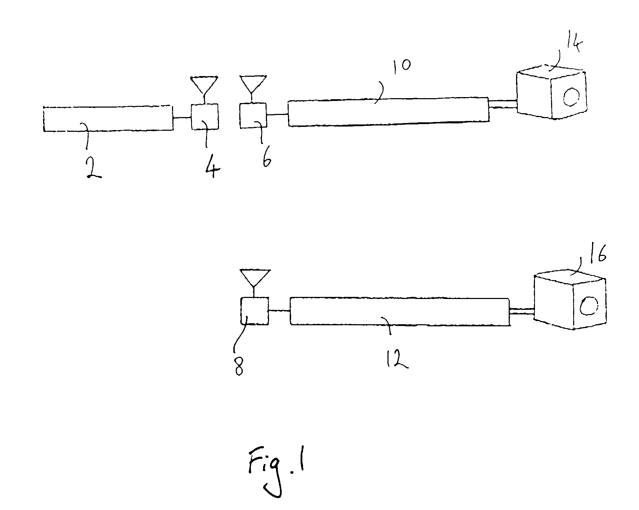

Figure 1 shows a system of the invention in schematic outline. The system comprises an audio source 2 which may be a CD player, cassette player, turntable, television, surround sound processor or the like. This source conventionally outputs a stereo signal output having left and right channel signals. The signals are processed and passed to transmitter unit 4 for wireless transmission to receivers 6, 8 associated with the left and right channels. Each receiver 6, 8 includes signal processing means 10, 12 to reconstruct the audio signals and amplify them for passage to respective left and right channel speakers 14, 16. Although separate receivers and processing means are shown for each channel, in practice these may be combined, as is discussed in more detail below.

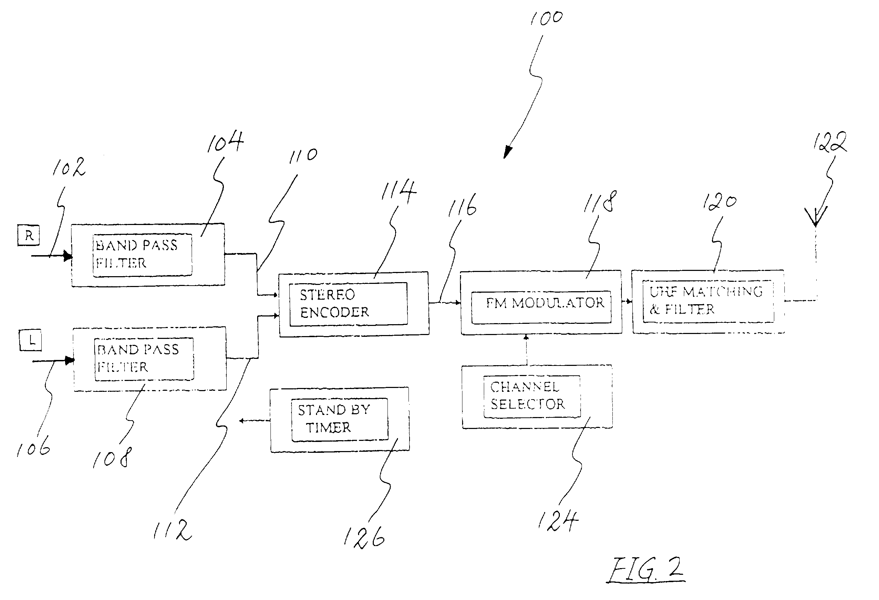

Figure 2 shows the configuration of the transmitter unit in more detail. The transmitter unit 100 receives right and left channel audio signals 102, 106 from an audio source such as a CD player, cassette player, record player or the like. These are each passed to respective band-pass filters 104, 108 which remove unwanted signals and pass any signals in the audio frequency range, typically 10 KHz to 15 KHz. In a television application these filters will also remove frequency components associated with the horizontal scanning frequency signal and harmonics thereof. The frequency signals 110 and 112 are passed to a stereo encoder 114 which combines the left and right channel signals into a single composite multiplexed audio signal in a conventional manner. The encoding scheme involves a summation of right and left signals to form a first signal S_{L+R}, and substraction of the same to form a second signal S_{L+R} which is modulated on a subcarrier signal of 38 KHz. The subcarrier is suppressed and combined with the first signal, the subcarrier-suppressed modulated second signal, and a pilot signal of 19 KHz, to form a multiplexed stereo signal, indicated at 116.

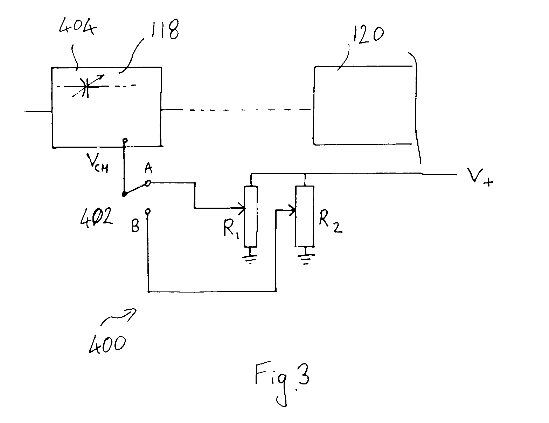

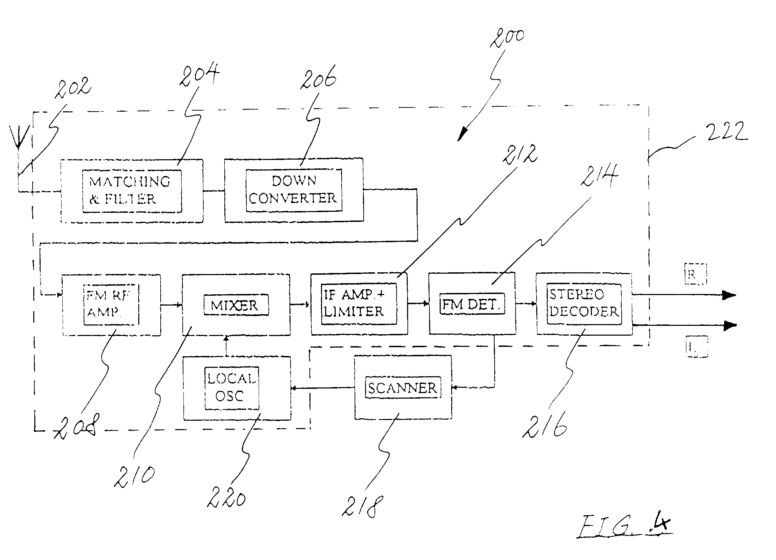

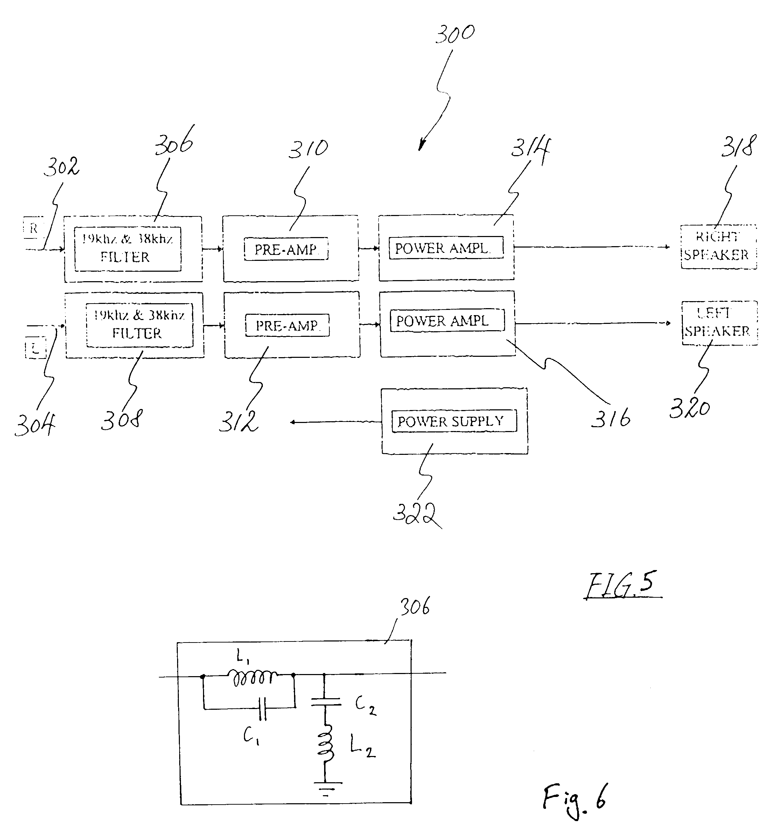

The stereo multiplexed signal 116 is fed to a conventional FM modulator 118 which converts this to a frequency-modulated signal in the ultra-high frequency (uhf) range above 900 MHz, typically in the range 902 MHz to 928 MHz. This frequency range is a Government-approved range in the USA, although other countries in the world may designate other frequency ranges in which case the modulator must be appropriately adapted. The FM Modulator includes a varactor-tuned circuit indicated schematically by 404 (in Figure 3) as is conventional

The FM modulated signal is passed to uhf matching and filter network 120 which provides conventional buffering and amplification before transmission to an antenna 122.

In accordance with an aspect of the invention, a channel selector 124 is provided in the transmitter. This allows one of a number of different carrier frequencies to be employed for the FM modulation, according to selection by the user. By this feature, it is possible to transmit the FM signal at different channels or frequencies so as to avoid interference or signal jamming with signals of similar frequency generated or carried by other electrical or electronic appliances in the vicinity.

Figure 3 illustrates the circuit 400 for establishing channel selection. The circuit comprises variable resistances R₁, R₂, and a switch 402 which may be in one of two positions A or B. As will be readily apparent, the circuit establishes one of two different voltages at V_{CH} depending on the position of the switch. Selection of position A or B changes the voltage supplied to the varactor circuit 404 and hence frequency of the modulation. Although the resistor network and switch establishes only two channels, a network having a larger number of switch positions and output voltages V_{CH} can be readily provided in order to provide a system having a larger number of channels.

The transmitter unit 100 also includes a standby timer 126 comprising a signal detector, timer and switch which serves to deactivate the unit 100 to a "standby mode" if no input signals 102 or 106 are received for a pre-determined time for example in the region of 90 seconds.

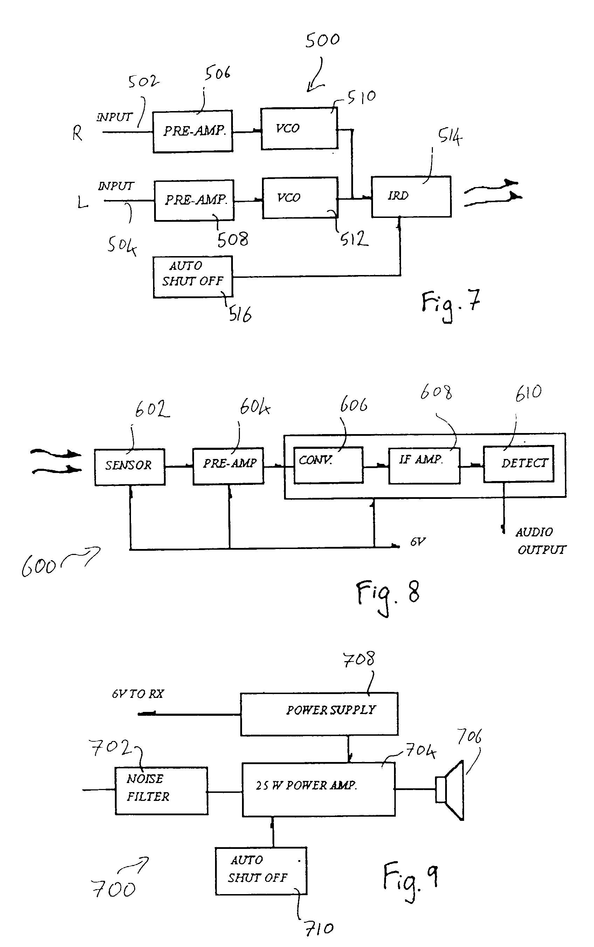

The receiver unit 200 is now described with reference to Figure 4. The uhf signal is picked up by the quarter wave length antenna 202 which is connected to conventional matching and filtering circuit 204 to provide impedance matching and to remove undesirable stray frequencies, and converted by downconverter 206 to a frequency in the region of 70 MHz, before amplification by amplifier 208. A mixer 210 further converts the frequency of the amplified signal to an intermediate frequency (IF) of about 10.7 MHz by a conventional signal substraction. This intermediate frequency (IF) signal is amplified and filtered to remove in particular AM noise at amplifier and limiter 212. At FM detector 214 the signal is re-converted to a multiplexed audio signal. This multiplexed audio signal is decoded to reconstruct the right and left channel signals at a stereo decoder 216.

The receiving unit 200 also includes scanner circuit 218 which controls the accepted frequency which is subsequently processed by the FM detector. In this way, the unit 200 can receive the uhf signals which may be transmitted on one of a number of different channels. The scanner 218 comprises a conventional 4-bit binary counting circuit which effects a stepwise frequency increase of output frequency of local oscillator 220. The scanner 218 is arranged to stop the stepwise frequency increase (disable) once an audio signal of at least a predetermined amplitude is detected at the FM detector 214, thereby "locking" at a particular received frequency. If the output is not the desired output (that is some other stray signal has been picked up), the user reactivates the scanner, to recommence the scanning function which thereby locks onto the next detected signal.

As will be appreciated, proprietary circuits are available for performing the receiving unit functions, aside from the scanning functions. As represented by the dotted line in Figure 4, the circuit elements therein can be embodied in a single proprietary IC, such as the SONY CX-A1238M.

Figure 5 illustrates the speaker driver circuit 300 and speakers for connection to the receiver unit 200. The speaker driver circuit 300 receives the right and left channel audio signals 302, 304. Importantly, each of these are passed through a filter network indicated 306, 308 which is arranged to remove signals at the frequency of the pilot signal, and the subcarrier signal as employed in stereo encoding, that is 19 KHz and 38 KHz respectively. A wide variety of different forms of filter networks can be used to effect the required filtering, but a simple network on the form as shown in Figure 6 is sufficient. This comprises a first parallel inductor and capacitor pair L₁, C₁ tuned to remove 19 KHz components, and a second series pair L₂, C₂ to remove 38 KHz components. The filtered audio signals are then each subjected to pre-amplification and power amplification through conventional pre-amplifiers 310, 312 and power amplifiers 314, 316 to give signals in the region of 25 Wᵣₘₛ to power right and left speakers 318, 320. A regulated power supply to supply a stable voltage to the receiving unit 200 is indicated 322.

Figures 7 to 9 illustrate schematically a wireless speaker drive system which operates using wireless transmission at infra-red frequencies, rather than uhf frequencies as previously described. Figure 7 illustrates a transmitter 500 unit. The transmitter unit 500 receives right and left channel inputs 502, 504 from the audio source. These are subjected to pre-amplification at pre-amps 506, 508. In contrast to the uhf system described above, the left and right channel signals are not encoded, but are separately transmitted at different frequencies. This avoids the requirement for stereo encoding. Instead, the left and right channels are fed to modulating means in the form of respective voltage controlled oscillators (VCO) 510, 512 which are arranged to output amplitude-varying signals at two different frequencies, typically 2.3 and 2.8 MHz. These signals are passed to infra-red diodes 514 to produce infra-red signals. An auto shut off circuit 516 is provided to shut off the system to a standby mode if no signals are detected for a pre-determined time.

An individual receiver unit 600 and speaker drive circuit 700 is provided for each of the left and right channels. As shown in Figure 8, the receiver unit 600 includes IR sensor 602, pre-amplification circuit 604 which filters out unwanted noise. The filtered signal is passed to convertor 606, which downconverts this to an intermediate frequency (IF) in the region of 10.7 MHz, which IF signal is then amplified by IF amplifier 608, and the audio signal reconstructed by detector 610.

The audio output of receiver circuit 600 is connected to speaker drive unit 700 which comprises a noise filter 702, which is a low-pass filter to remove signal noise, and then to power amplifier 704 which amplifies the signal to about 25 Wᵣₘₛ to drive speakers 706. A supply 708 is provided to give stable 6V dc power source for receiver unit 600 and power amplifier 704. An auto shut-off 710 is also provided for the power amplifier, which is arranged to shut off the amplifier if no signal is received for a pre-determined time.

## Claims

1. A wireless speaker drive system for providing a wireless connection between an audio output and a speaker, comprising:
(a) a frequency modulator to convert the audio signal into a frequency modulated signal;
(b) channel selection means to allow user-selection of the carrier frequency of frequency modulation;
(c) signal transmission means to wirelessly transmit the frequency-modulated signal;
(d) signal receiving means remote from said signal transmission means;
(e) signal reconstruction means including an FM detector to reconstruct an audio signal from the FM signal, and
(f) scanning means to adjust the frequency at which or range of frequencies over which signal reconstruction occurs.

2. A system according to claim 1 wherein said scanning means is arranged to continuously adjust the frequency at which or range of frequencies over which signal reconstruction occurs until a frequency of high amplitude is received.

3. A system according to claim 1 or 2 wherein said audio signal is a stereo signal comprising left and right channel signals, the said system further comprises a stereo encoder to produce a single multiplexed signal from said left and right channel signals, prior to said frequency modulation.

4. A system according to claim 3 wherein said signal reconstruction means includes a stereo decoder to reconstruct right and left audio outputs.

5. A system according to any one of claims 1 to 4 wherein said frequency modulator includes a carrier signal generating means to generate a carrier signal of frequency determined by an applied voltage.

6. A system according to claim 5 wherein the channel section means comprises a resistor network and switch operable by the user and having at least two switch positions in order to control the applied voltage applied to the carrier signal generating means.

7. A system according to claim 6 wherein the carrier signal generating means include a variable capacitor arranged to output a signal of frequency dependent on applied voltage.

8. A system according to any preceding claim wherein the scanning means comprise a binary counter arranged to effect a frequency scan in the form of a stepwise frequency increase of the frequency or range of frequencies over which signal reconstruction is effected, and to stop such frequency scan, locking the range of accepted frequencies when a high amplitude signal is received.

9. A system according to claim 8 including a mixer which mixes the received signals with an output signal from a local oscillator, said scanning means being arranged to effect a stepwise frequency scan of the frequency of the local oscillator output.

10. A wireless speaker drive system for providing a wireless connection between an audio output and the speaker, comprising:
(a) a stereo encoder employing a pilot signal and subcarrier signal to produce a single multiplexed signal from right and left channel signals;
(b) a frequency modulator to convert the multiplexed audio signal into a frequency modulated signal;
(c) signal transmission means to effect wireless transmission of the frequency-modulated signal;
(d) signal receiving means remote from said signal transmission means;
(e) signal reconstruction means including a frequency modulation detector to reconstruct a multiplexed audio signal from the received frequency modulated signal, and a stereo decoder to reconstruct right and left channel audio signals from said multiplexed signal;
(f) filter means for removing unwanted signals at the frequency of both the pilot signal and subcarrier signal employed in the stereo encoder.

11. A system according to claim 10 wherein said stereo encoder comprises summation means for adding said left and right channel signals together to produce a first combined audio signal, substraction means for subtracting said left and right channel signals to produce a second combined audio signal, means for modulating a subcarrier signal with one of the first and second combined audio signals and means for combining the other of the first and second combined audio signals with the modulated subcarrier signal with a pilot signal.

12. A system according to claim 10 or 11 further comprising channel selection means to allow a user-selection of the carrier frequency of frequency-modulation, and scanning means to adjust the frequency at which or range of frequencies over which signal reconstruction occurs.

13. A system according to claim 12 wherein said scanning means is arranged to continuously adjust the frequency at which or range of frequencies over which signal reconstruction occurs until a frequency of high amplitude is received.

14. A system according to any one of claims 10 to 13 wherein said frequency modulator includes a carrier signal generating means to generate a carrier signal of frequency determined by an applied voltage.

15. A system according to claim 12 or 13 wherein the channel selection means comprises a resistor network and switch operable by the user and having at least two switch positions in order to control the applied voltage applied to the carrier signal generating means.

16. A system according to claim 14 wherein the carrier signal generating means include a variable capacitor arranged to output a signal of frequency dependent on applied voltage.

17. A system according to claim 16 wherein the scanning means comprise a binary counter arranged to effect a frequency scan in the form of a stepwise frequency increase of the frequency or range of frequencies over which signal reconstruction is effected, and to stop such frequency scan, locking the range of accepted frequencies when a high amplitude signal is received.

18. A system according to claim 17 including a mixer which mixes the received signals with an output signal from a local oscillator, said scanning means being arranged to effect a stepwise frequency scan of the frequency of the local oscillator output.

19. A wireless speaker drive system for providing an infrared wireless connection between an audio output and a speaker, comprising:
(a) modulating means for producing a modulated signed from the audio output;
(b) an infra-red transmitter to wirelessly transmitting the modulated signed as an infra-red signal;
(c) infra-red signal receiving means remote from said infra-red transmitter;
(d) signal reconstruction means including a detector to reconstruct an audio signal;
(e) an amplifier to amplify the audio signal sufficiently to drive a speaker.
